# EUROPÄISCHE PATENTSCHRIFT

(11) **EP 2 735 047 B1**
(45) Veröffentlichungstag und Bekanntmachung des Hinweises auf die Patenterteilung: **04.04.2018**
(21) Anmeldenummer: 12748033.3
(22) Anmeldetag: 16.08.2012
(51) Int. Cl.: H01M 8/1004, H01M 4/88, C25B 9/08

(54) **VERFAHREN ZUR TROCKENHERSTELLUNG EINER MEMBRAN-ELEKTRODEN-EINHEIT, MEMBRAN-ELEKTRODEN-EINHEIT SOWIE WALZANORDNUNG**
METHOD FOR DRY PRODUCTION OF A MEMBRANE-ELECTRODE UNIT, MEMBRANE-ELECTRODE UNIT AND ROLLER ASSEMBLY
PROCÉDÉ DE FABRICATION À SEC D'UNE UNITÉ D'ÉLECTRODES À MEMBRANE, UNITÉ D'ÉLECTRODES À MEMBRANE ET SYSTÈME DE LAMINOIR

(30) Priorität: 15.09.2011 EP 11181457
(43) Veröffentlichungstag der Anmeldung: 28.05.2014
(73) Patentinhaber: Siemens Aktiengesellschaft, 80333 München (DE)
(72) Erfinder: DATZ, Armin, 91099 Poxdorf (DE); DENNERLEIN, Klaus, 91058 Erlangen (DE); KÜHN, Carola, 90449 Nürnberg (DE); REINER, Andreas, 91083 Baiersdorf (DE); STRAUB, Werner, 91093 Hessdorf (DE)
(86) Internationale Anmeldenummer: PCT/EP2012/065987
(87) Internationale Veröffentlichungsnummer: WO 2013/037591

(56) Entgegenhaltungen:
- WO-A1-99/34466
- WO-A1-2010/075492
- WO-A2-00/26982
- WO-A2-02/059989
- WO-A2-03/073543
- WO-A2-2006/005658
- DE-A1- 10 124 272
- DE-A1- 19 509 749
- DE-A1-102005 038 612
- US-A1- 2003 191 021
- US-A1- 2009 169 950

## Beschreibung

Die Erfindung betrifft ein Verfahren zur Trockenherstellung einer Membran-Elektroden-Einheit, eine Membran-Elektroden-Einheit hergestellt nach diesem Verfahren sowie eine Walzanordnung umfassend zwei Laminierwalzen zur Trockenherstellung von Membran-Elektroden-Einheiten.

Die Herstellung von Membran-Elektroden-Einheiten (Englisch Membrane Electrode Assembly, MEA) erfolgt in der Regel nach der seit Jahren praktizierten und bewährten Methode der Brennstoffzellen-MEA-Fertigung. Bei dieser Methode werden in einer Aluminiumform die MEA-Komponenten (Elektrode - befeuchtete Membran - Elektrode) zwischen Silikonmatten positioniert, während eine Heißpresse aufgeheizt wird. Die zweiteilige Aluminiumform wird dann in der vorgeheizten Heißpresse mittels Druck zusammengehalten und dadurch abgedichtet, um ein Austrocknen der Membran während des Prozessvorgangs zu vermeiden. Die eigentliche Presszeit ohne Aufheiz- und Abkühlvorgang beträgt je nach Dicke der Pressform ca. 20 min bis 40 min. Die Pressform muss schließlich vor der Entnahme der MEA noch abgekühlt werden.

Ein weiteres Herstellungsverfahren für beidseitig katalysatorbeschichtete Membranen ist aus der DE 10 2005 038 612 A1 bekannt. Bei diesem Verfahren werden parallel auf einen ersten und einen zweiten Träger eine erste und eine zweite Ionomerschicht aufgebracht. Anschließend wird auf die erste Ionomerschicht als Lösung eine Anodenkatalysatorschicht und auf die zweite Ionomerschicht als Lösung eine Kathodenkatalysatorschicht aufgebracht und über Heißlufttrocknung, Infrarottrocknung, Mikrowellentrocknung und/oder Plasmaverfahren getrocknet. Die Träger werden nach einem Trocknen der Anodenkatalysatorschicht und der Kathodenkatalysatorschicht entfernt und die erste Ionomerschicht wird mit der zweiten Ionomerschicht unter Einwirkung von Druck und Temperatur mit Hilfe zweier Laminierwalzen verbunden. Schließlich wird die dabei erzeugte, beidseitig katalysatorbeschichtete Membran mit einer Stützfolie versehen. Das Verfahren gemäß DE 10 2005 038 612 A1 ist jedoch zeitaufwendig, da die Anoden- und Kathodenkatalysatorschicht vor dem Entfernen der Träger vor dem Laminieren getrocknet werden müssen.

In der DE 101 24 272 A1 ist ein Verfahren zur kontinuierlichen Herstellung einer Polymerelektrolytmembran-Elektrodenanordnung beschrieben, bei dem die Fertigung der Elektrolytenmembran durch Beschichtung eines polymeren Trägermaterials mit einer PEM-haltigen Lösung erfolgt und anschließend die PEM-haltige Lösung getrocknet wird. Diese Elektrolytschicht wird dann mit einem parallel dazu beschichteten kohlenstoffhaltigen Substrat, das ebenfalls zunächst getrocknet wird, in einer Doppelbandpresse verpresst.

Die aus Lösung hergestellten Membranen lassen sich jedoch nur in geringen Schichtdicken herstellen, bei einer Membrandicke von 50µm sind z.B. mehrere Stunden für die Trocknung notwendig, um möglichst blasen- und rissfreie Membranen zu erhalten.

Die WO 2010/075492 A1 beschreibt ein Verfahren zur Herstellung von katalytisch beschichten Membranen für die Anwendung in Brennstoffzellen. Bei diesem Prozess wird zunächst ein "Sandwich" aus einer Membran sowie beidseitig der Membran angeordneten Katalysatorschichten, die auf Substraten wie z.B. Kapton® angebracht sind, gebildet. Diese mehrlagige Anordnung wird dann mittels zwei Förderbänder zunächst durch eine Vorheizzone, anschließend durch eine Heizzone, durch zwei Andruckwalzen und schließlich durch eine Kühlzone transportiert.

Die US 2009/169950 A1 beschreibt ein Verfahren zur Herstellung von katalytisch beschichteten Membranen, insbesondere für die Anwendung in Brennstoffzellen. Das Verfahren umfasst die Verwendung einer Walzenanordnung zum Laminieren der Membranen. Die Walzenanordnung umfasst zwei Walzen, wobei die Walzen beheizbar sind. Weiterhin lässt sich die Drehgeschwindigkeit der Walzen einstellen. Der Aufpressdruck, den die Walzen auf die Membran ausüben, lässt sich ebenso einstellen.

Der Erfindung liegt die Aufgabe zugrunde, die Herstellungszeit bei der Fertigung von Membran-Elektroden-Einheiten zu senken.

Die Aufgabe wird erfindungsgemäß gelöst durch ein Verfahren zur Trockenherstellung einer Membran-Elektroden-Einheit für einen Elektrolyseprozess, wobei eine schichtartige Anordnung aufgebaut wird, umfassend:
- eine durch Extrusion hergestellte Membran, die bei einer Temperatur zwischen 80°C und 100°C für einen Zeitraum von 15 min bis 30 min vorgetrocknet wird,
- beidseitig der Membran je eine Träger-Elektroden-Einheit mit einer auf einem Träger aufgebrachten Elektrodenschicht,
- außenseitig zwei Trennfolien,
wobei die Anordnung zwischen zwei Laminierwalzen zusammengepresst wird, so dass wenigstens zwischen der Membran und den Elektrodenschichten eine Druckverbindung hergestellt wird.

Die Erfindung basiert auf der Idee, während des gesamten Herstellungsprozesses die Träger-Elektroden-Einheiten und die Membran trocken zu halten und sie im trockenen Zustand zu laminieren. Die Laminierung erfolgt dabei zwischen den Trennschichten oder -folien, welche die MEA vor einem direkten Kontakt zu den Walzen bzw. Förderbänder einer Laminiermaschine schützen.

Innerhalb der Trennfolien befinden sich die Träger-Elektroden-Einheiten umfassend einen Träger, z.B. aus Kohlepapier, und eine auf den Trägern aufgebrachte Elektrodenschicht, beispielsweise aus Iridium auf der Anodenseite und Platin auf der Kathodenseite. Die Elektrodenschichten werden, z.B. in einem Siebdruckverfahren, auf den Träger aufgebracht, so dass die fertigen Elektrodenschichten trocken sind.

Um die Träger-Elektroden-Einheiten sind optional die Rahmen vorgesehen, die insbesondere aus Teflon®, Polyetherketonen (PEK, PEEK und PEKK), Aramiden oder ähnlich temperaturstabilen Kunststoffen sind. Deren Funktion ist es die Träger-Elektroden-Einheiten zu fixieren und abzudichten, außerdem wird durch die Rahmen der Druck am Rand der MEA verringert. Die Rahmen sind jedoch nicht zwingend erforderlich und können entfallen.

Zwischen den Elektrodenschichten ist schließlich die Membran angeordnet, die aus einer Protonenaustauschermembran (Englisch: Proton Exchange Membrane, PEM), insbesondere aus Nafion® besteht. Es können jedoch auch andere Materialen für die Membran verwendet werden. Hierbei wird eine vorgefertigte, durch Extrusion hergestellte kommerzielle Membran verwendet. Gegenüber der Membran aus DE 101 24 272 A1 bekannten Membran ist die extrudierte Membran aufgrund ihrer Morphologie deutlich stabiler und ist auch in Schichtdicken von 170µm und größer herstellbar. Die mechanische Stabilität einer solchen Membran ist vor allem bei Hochdruckelektrolyse von großem Vorteil, wegen möglicher hoher Druckunterschiede zwischen der Wasserstoff- und der Sauerstoffseite. Die Verwendung einer extrudierten Membran zeichnet sich gegenüber dem Verfahren gemäß DE 101 24 272 A1 außerdem durch deutlich niedrigere Investionskosten aus.

Bevor die Membran eingesetzt wird, wird sie für ca. 15 min bis 30 min bei einer Temperatur von ca. 80°C bis 100°C vorgetrocknet. Die Dauer sowie die Temperatur des Trockenvorgangs richten sich nach den physikalischen Eigenschaften der Membran, z.B. ihrer Dicke. Die Trocknungsdauer von 15 min bis 30 min bezieht sich auf eine 180µm dicke Membran. Eine extrudierte Elektrolytmembran z.B. Nafion® 117 (180µm Dicke) verliert ausgehend vom Lieferzustand (RT und 50 % r.H.) bei 80°C bis zu 5,5 % Wasser.

Versuche haben gezeigt, dass diese Temperatur ausreicht, um ein konstantes Trockengewicht zu erreichen. Bei höheren Temperaturen wird die Membran wellig und lässt sich dann nicht mehr so gut verarbeiten.

Die Vortrocknung verhindert, dass beim Aufheizen der Membran zwischen den Laminierwalzen Wasser aus der Membran ausdampft, welches dann - vor allem bei großen Membranflächen - durch Quellung der Membran (vor dem Walzeneinzug) zur Faltenbildung führen kann. Beim Aufheizen der Membran über die Laminierwalzen wird die Membran nicht komplett auf längere Zeit stark erwärmt, sondern nur lokal. Bei einer bevorzugten Laminiergeschwindigkeit von z.B. 20 cm/min dauert der Druckkontakt mit den heißen Walzen weniger als eine Sekunde. Die Trockenherstellung der Membran-Elektroden-Einheiten ist somit auch materialschonender als die bisher übliche Methode mittels einer Heißpresse.
Diese gesamte Anordnung bildet eine Einheit, die zwischen zwei Laminierwalzen einer Walzanordnung zusammengepresst wird. Durch den hohen Druck und eventuell Temperatur erfolgt eine Druckverbindung zwischen der Membran und den Elektrodenschichten, wodurch die untrennbare Membran-Elektroden-Einheit gebildet wird.

Eine solche Membran-Elektroden-Einheit wird insbesondere zur Elektrolyse eingesetzt. Diese Art der Fertigung ist jedoch auch für die Membran-Elektroden-Einheiten von Brennstoffzellen und Redox-Flow-Batterien anwendbar.

Die Herstellung von mehreren Membran-Elektroden-Einheiten erfolgt dabei insbesondere kontinuierlich, indem zwischen zwei quasi endlosen Trennfolien mehrere sandwich- oder schichtartige Anordnungen hintereinander angeordnet werden und die Trennfolien in einem kontinuierlichen Vorgang entlang ihrer Länge gewalzt werden.

Durch das vorgeschlagene Laminierverfahren wird die benötigte Zeit zur Herstellung von Membran-Elektroden-Einheiten deutlich gesenkt. Das Verfahren führt außerdem zu einer Reduktion der Herstellungskosten, da für die Herstellung weniger Energie im Vergleich zur derzeit praktizierten Herstellungsmethode gebraucht wird: Es muss nicht für jede Elektrode einzeln eine Aufheizphase der Presse vorgenommen werden und der Abkühlprozess entfällt praktisch vollständig. Da die Laminierung im trockenen Zustand der Membran erfolgt, entfällt auch das bisherige Feuchthalten der Membran bei hohen Temperaturen unter Druck in der Heißpresse. Die Elektroden werden ebenfalls nicht befeuchtet. Zudem sind trocken gefertigte und gelagerte Membran-Elektroden-Einheiten für den Einbau in Stacks besser geeignet, da keine Formveränderung durch quellende Membran stattfindet. Für eine Membran-Elektroden-Einheit mit einer Elektrodenfläche von ca. 300 cm² erfolgt die Trockenherstellung mit Aufbau der Anordnung (3 min bis 5 min) und Durchlauf durch die Walzanordnung (1 min bis 2 min) somit in einigen Minuten, insbesondere unterhalb von 10 Minuten. Vorzugsweise wird die Membran-Elektroden-Einheit bei einer Temperatur von ca. 180°C bis 190°C laminiert. Dank der stabilen, extrudierten Membran erfolgt die Laminierung bei einer relativ hohen Temperatur von ca. 180°C, so dass der Laminiervorgang kürzer ist als bei niedrigeren Temperaturen und die Laminierverbindung stabiler ist.

Als Trennfolien werden bevorzugt Polyimidfolien, z.B. Kapton® oder Norton®-Folien, verwendet. Alternativ können PTFE-Folien oder Folien aus anderen Materialien, die bei ca. 200°C bis 220°C temperaturbeständig sind, eingesetzt werden. Die Trennfolien haben die Funktion die Träger-Elektroden-Einheit und die Membran in der gewünschten Position zu fixieren und außerdem ein verkleben der Membran mit der heißen Laminierwalze zu verhindern. Kapton® oder Norton®-Folie sind bei den gewählten Verarbeitungstemperaturen formstabil, transparent (zusätzliche optische Kontrolle der Träger-Elektroden-Einheit- oder Membran-Positionierung möglich) und wieder verwendbar. Eine Dicke der Trennfolie beträgt bevorzugt etwa 125µm.

Nach einer bevorzugten Variante werden nach dem Herstellen der Druckverbindung mindestens die äußeren Trennfolien und die Rahmen entfernt. Die Trennfolien und die optionalen Rahmen haben lediglich eine materialschonende bzw. unterstützende Funktion bei der Herstellung der Membran-Elektroden-Einheit und werden somit am Schluss entfernt, so dass die Membran-Elektroden-Einheit, z.B. für den Einsatz in Brennstoffzellen oder bei einem Elektrolyseprozess, bereit ist. Die Entfernung der Trennfolien und der Rahmen kann direkt nach dem Laminieren oder später am Einsatzort der Membran-Elektroden-Einheit erfolgen.

Nach einer weiteren bevorzugten Variante werden nach dem Herstellen der Druckverbindung die Träger für die Elektrodenschichten ebenfalls entfernt. Bei Membran-Elektroden-Einheiten für Brennstoffzellen bleiben die Träger aus Kohlepapier erhalten und bilden eine Gasdiffusionsschicht. Wenn die Membran-Elektroden-Einheiten jedoch für einen Elektrolyseprozess vorgesehen sind, kann das Trägermaterial abgezogen und beim Aufbau der Elektrolysezellen durch eine elektrochemisch beständigere Gasdiffusionsschicht (z.B. durch Titan-Sinterplatten oder Titangeweben) ersetzt werden.

Bevorzugt weisen die Trennfolien die größte Fläche von den Komponenten der schichtartigen Anordnung auf, d.h. sie überdecken die restlichen Komponenten der Anordnung vollständig und ragen über diese hinaus. Auf der einen Seite gewähren die Trennfolien somit den besten Schutz gegen die insbesondere aufgeheizten Laminierwalzen. Auf der anderen Seite wird zudem eine kontinuierliche Herstellung "am Band" erleichtert, bei der je nach Bedarf die quasi endlosen Trennfolien an geeigneter Stelle abgetrennt werden, um nach der Druckverbindung die einzelnen Membran-Elektroden-Einheiten zu gewinnen.

Die Herstellung der Membran-Elektroden-Einheiten wird weiterhin vereinfacht, indem zweckdienlicherweise beim Einlaufen der Trennfolien in einen Walzspalt zwischen den Laminierwalzen im Wesentlichen keine Druckkraft auf die Anordnung wirkt und eine Druckkraft auf die Anordnung ausgeübt wird, erst wenn die Träger-Elektroden-Einheiten bzw. die optionalen Rahmen sich im Bereich des Walzspalts befinden. Beim Einlaufen der Trennfolien der Anordnung befindet sich der Walzspalt somit in einem "offenen" Zustand, um den Einlauf der Anordnung in den Walzspalt zu beschleunigen. Die Laminierwalzen werden zusammengefahren erst wenn die Träger-Elektroden-Einheiten bzw. die optionalen Rahmen den Walzspalt erreicht haben, so dass sichergestellt wird, dass die Druckkraft der Laminierwalzen über die gesamte Fläche der Elektrodenschichten und der Membran wirkt. Außerdem sind insbesondere unbeheizte Abzugswalzen vorgesehen, welche die Anordnung und insbesondere die Trennfolien in den Walzspalt zwischen den Laminierwalzen einziehen. Die Abzugswalzen fördern die Anordnung durch den Walzspalt wenn die Laminierwalzen geöffnet sind. Die Abzugswalzen sind insbesondere in Flussrichtung hinter den Laminierwalzen angeordnet, so dass sie ein Ende der Trennfolien erfassen und den Rest der schichtartigen Anordnung in den Walzspalt zwischen den Laminierwalzen einziehen.

In einer vorteilhaften Ausgestaltung und Weiterbildung der Erfindung umfasst die schichtartige Anordnung um die jeweilige Träger-Elektroden-Einheit einen Rahmen zum Fixieren der Träger-Elektroden-Einheit.

Die Aufgabe wird weiterhin erfindungsgemäß gelöst durch eine Membran-Elektroden-Einheit hergestellt mittels des Verfahrens nach einer der vorhergehenden Ausführungen.

Die in Bezug auf das Verfahren angeführten Vorteile und bevorzugten Ausgestaltungen lassen sich sinngemäß auf die Membran-Elektroden-Einheit übertragen.

Die Walzanordnung umfasst die Laminierwalzen und gegebenenfalls auch die Abzugswalzen. Die Laminierwalzen sind bevorzugt aufheizbar, wobei ihre Temperatur regelbar ist. Die verwendeten Laminierwalzen sind zweckdienlicherweise aus Edelstahl, Silikon und/oder einen Fluorkautschuk, z.B. Viton®. Da die verschiedenen Membranen unterschiedliche Bearbeitung erfordern, sind vorteilhafterweise ein Anpressdruck der Laminierwalzen auf der schichtartigen Anordnung und eine Spaltbreite der Laminierwalzen separat regelbar bzw. einstellbar. Unter Spaltbreite wird hierbei der minimal mögliche Abstand zwischen den Laminierwalzen während des Laminierens verstanden. Zudem ist vorzugsweise eine Drehgeschwindigkeit der Laminierwalzen, insbesondere auch der Abzugswalzen, einstellbar.

Ein Ausführungsbeispiel der Erfindung wird anhand einer Zeichnung näher erläutert. Hierin zeigen:
- FIG 1: die Herstellung einer Membran-Elektroden-Einheit zwischen zwei Laminierwalzen, und
- FIG 2: eine Vergrößerung des Ausschnitts II gemäß FIG 1.

In den verschiedenen Figuren haben gleiche Bezugszeichen die gleiche Bedeutung.

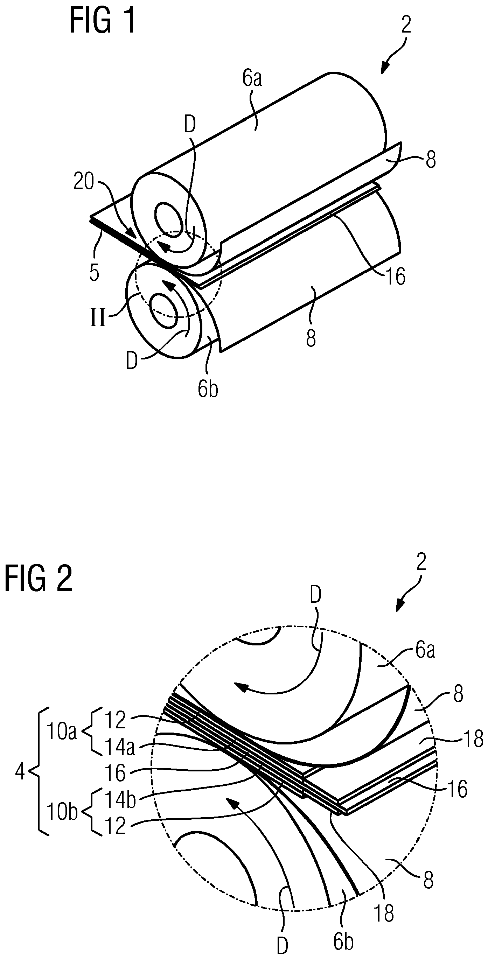

Aus FIG 1 und FIG 2 geht eine Walzanordnung 2 hervor, mit deren Hilfe eine Membran-Elektroden-Einheit 4 gefertigt wird. Die Walzanordnung 2 umfasst zwei Laminierwalzen 6a, 6b die sich im Betrieb in einer Drehrichtung D drehen. Die Laminierwalzen 6a, 6b sind im gezeigten Ausführungsbeispiel insbesondere aus Edelstahl.

Zur Herstellung der Membran-Elektroden-Einheit 4 wird eine sandwichartige Anordnung 5 aufgebaut, die durch die Laminierwalzen 6a, 6b zusammengepresst wird. Der schichtweise Aufbau der Anordnung 5 ist in FIG 2 gezeigt. Beidseitig von außen nach innen sind übereinander die einzelnen Komponenten der Anordnung 5 angeordnet:
- zwei Trennfolien 8 z.B. aus Kapton®, welche den Kontakt zu den Laminierwalzen 6a, 6b herstellen,
- zwei Träger-Elektroden-Einheiten 10a, 10b, umfassend jeweils einen Träger 12 z.B. aus Kohlepapier oder Polyimidfolie und eine darauf aufgebrachte Elektrodenschicht 14a (Anode) z.B. aus Iridium, bzw. 14b (Kathode), z.B. aus Platin,
- mittig angeordnet eine Membran 16, z.B. aus Nafion®, die etwas länger ist als die Träger-Elektroden-Einheiten 10a, 10b (siehe FIG 2),
- sowie zwei um Träger-Elektroden-Einheiten 10a, 10b angeordnete Rahmen 18 aus PTFE, z.B. aus Teflon®, welche die Träger-Elektroden-Einheiten 10a, 10b fixieren und abdichten.

Die Rahmen 18 sind nur optional und auf sie kann verzichtet werden - ihre Funktion wird dann von den Trennfolien 8 übernommen.

Das Verfahren zur Herstellung der Membran-Elektroden-Einheit 4 zeichnet sich dadurch aus, dass die Membran 16 während des gesamten Herstellungsprozesses trocken gehalten wird, d.h. die Membran 16 wird nicht befeuchtet, um eine Verbindung zwischen ihr und den Elektrodenschichten 14a, 14b herzustellen. Die Membran 16 ist hierbei eine durch Extrusion vorgefertigte Nafion®-Membran der Firma DuPont (beispielsweise Nafion® 117 oder Nafion® 1110 mit Dicken von ca. 180µm und 250µm. Die vor dem Einbau in der Membran-Elektroden-Einheit 4 bei 80°C bis 100°C, insbesondere bei 80°C bis 90°C ca. 15 min bis 30 min lang getrocknet wird.

Zum Beginn des Laminiervorganges sind die Laminierwalzen 6a, 6b in einer geöffneten Position auseinander gefahren. In dieser Position der Laminierwalzen 6a, 6b wird die Kapton®-Folie 8, die länger ist als die restlichen Komponenten 10a, 10b, 16, 18 der Anordnung 5, durch einen Walzspalt 20 durchgeschoben. Dieser Vorgang kann durch zwei hier nicht näher gezeigte Abzugswalzen erleichtert werden, indem die Abzugswalzen durch ihre Rotation die Trennfolien 8 weiter befördern, so dass die gesamte Anordnung 5 in den Walzspalt 20 eingezogen wird. Beim Einlaufen der Trennfolien 8 in den Walzspalt 20 wirkt auf die Anordnung 5 somit im Wesentlichen keine Druckkraft. Erst wenn die Träger-Elektroden-Einheiten 10a, 10b bzw. die Rahmen 18 sich im Walzspalt 20 befinden, werden die Laminierwalzen 6a, 6b aufeinander zugefahren und somit wird eine Druckkraft auf die Anordnung 5 ausgeübt.

Im Betrieb werden die Laminierwalzen 6a, 6b beheizt, um die Membran 16 zu erweichen und unter Druck mit der Elektrodenschicht 14a, 14b zu verbinden. Eine Drehgeschwindigkeit, eine Druckkraft der Laminierwalzen 6a, 6b sowie eine Spaltbreite des Walzspaltes 20 sind zudem einstellbar bzw. stufenlos regelbar.

Mittels der Walzanordnung 2 können im Rahmen eines kontinuierlichen Prozesses insbesondere mehrere Membran-Elektroden-Einheiten 4 hergestellt werden, indem zwischen den Trennfolien 8 mehrere Elektrode-Membran-Elektrode-Anordnungen hintereinander angeordnet sind.

Nach dem Laminiervorgang werden als Erste die Trennfolien 8 abgezogen und anschließend werden die optionalen Rahmen 18 entfernt, wenn sie vorhanden sind. Eine derart hergestellte Membran-Elektroden-Einheit kann in einem Elektrolyseur, einer Brennstoffzelle oder einer Redox-Flow-Batterie eingesetzt werden. Bei der Anwendung der Membran-Elektroden-Einheit 4 in einem Elektrolyseur kann auch optional der Träger 12, z.B. aus Kohlepapier oder Polyimidfolie, entfernt und durch eine andere, oxidationsbeständigere Gasdiffusionsschicht, z.B. poröse Titanplatten, ersetzt werden.

Der wesentliche Vorteil des oben beschriebenen Verfahrens zur Trockenherstellung von Membran-Elektroden-Einheiten 4 gegenüber dem bisher gängigen Verfahren mittels einer Heißpresse besteht in der deutlich verkürzten Herstellungszeit, da das Feuchthalten der Membran 16 bei hohen Temperaturen von ca. 150°C bis 200°C unter Druck entfällt. Sowohl die Zeit als auch die benötigte Energie zum Heizen bzw. Kühlen der Presse zwischen den einzelnen Pressvorgängen entfällt. Verwendet wird hierbei eine vorgefertigte, durch Extrusion hergestellte, mechanisch stabile und physikalisch beständige Membran 16, die vor dem Einbau in der Membran-Elektroden-Einheit (4) vorgetrocknet wird. Das Vortrocknen der im Lieferzustand wasserhaltigen Membran 16 verhindert die Wasserabgabe der Membran während des Heißwalzens. Das Verfahren zeichnet sich durch hohe Walzentemperaturen, die eine ausreichende Anbindung der Katalysatorschicht (14a, 14b) an die Membran 16 ermöglichen sowie durch eine einfache optische Positionierung der Elektroden 10a, 10b vor dem Walzeneinzug, aus.

## Patentansprüche

1. Verfahren zur Trockenherstellung einer Membran-Elektroden-Einheit (4) für einen Elektrolyseprozess, wobei eine schichtartige Anordnung (5) aufgebaut wird, umfassend folgende Komponenten:
- mittig positioniert eine durch Extrusion hergestellte Membran (16), die bei einer Temperatur zwischen 80°C und 100°C für einen Zeitraum von 15 min bis 30 min vorgetrocknet wird,
- beidseitig der Membran (16) je eine Träger-Elektroden-Einheit (10a, 10b) mit einer auf einem Träger (12) aufgebrachten Elektrodenschicht (14a, 14b),
- außenseitig zwei Trennfolien (8),
wobei die Anordnung (5) zwischen zwei Laminierwalzen (6a, 6b) zusammengepresst wird, so dass wenigstens zwischen der Membran (16) und den Elektrodenschichten (14a, 14b) eine Druckverbindung hergestellt wird.

2. Verfahren nach Anspruch 1,
wobei die Membran-Elektroden-Einheit (4) bei einer Temperatur von 180°C bis 190°C laminiert wird.

3. Verfahren nach Anspruch 1 oder 2,
wobei als Trennfolien (8) Polyimidfolien verwendet werden.

4. Verfahren nach einem der vorhergehenden Ansprüche,
wobei nach dem Herstellen der Druckverbindung mindestens die äußeren Trennfolien (8) und die Rahmen (18) entfernt werden.

5. Verfahren nach einem der vorhergehenden Ansprüche,
wobei nach dem Herstellen der Druckverbindung die Träger (12) für die Elektrodenschichten (10a, 10b) entfernt werden.

6. Verfahren nach einem der vorhergehenden Ansprüche,
wobei die Trennfolien (8) die größte Fläche aufweisen.

7. Verfahren nach einem der vorhergehenden Ansprüche,
wobei beim Einlaufen der Trennfolien (8) in einen Walzspalt (20) zwischen den Laminierwalzen im Wesentlichen keine Druckkraft auf die Anordnung (5) wirkt und eine Druckkraft auf die Anordnung (5) ausgeübt wird, wenn die Träger-Elektroden-Einheit (10a, 10b) oder die optionalen Rahmen (18) sich im Bereich des Walzspalts (20) befinden.

8. Verfahren nach einem der vorhergehenden Ansprüche, wobei die schichtartige Anordnung weiter umfasst: um die jeweilige Träger-Elektroden-Einheit (10a, 10b) einen Rahmen (18) zum Fixieren der Träger-Elektroden-Einheit (10a, 10b).

9. Membran-Elektroden-Einheit (4) hergestellt mittels eines Verfahrens nach einem der vorhergehenden Ansprüche.

## Claims

1. Method for the dry production of a membrane electrode unit (4) for an electrolysis process, wherein a layered arrangement (5) is assembled comprising the following components:
- a centrally positioned membrane (16) which is produced by means of extrusion and which is pre-dried at a temperature between 80°C and 100°C for a period of time from 15 min to 30 min,
- a substrate electrode unit (10a, 10b) on each side of the membrane (16), comprising an electrode layer (14a, 14b) applied to a substrate (12),
- two separating films (8) on the outer sides,
wherein the arrangement (5) is pressed together between two laminating rollers (6a, 6b) such that a pressure connection is produced at least between the membrane (16) and the electrode layers (14a, 14b).

2. Method according to claim 1,
wherein the membrane electrode unit (4) is laminated at a temperature of 180°C to 190°C.

3. Method according to claim 1 or 2,
wherein polyimide films are used as separating films (8).

4. Method according to one of the preceding claims, wherein after the production of the pressure connection at least the outer separating films (8) and the frames (18) are removed.

5. Method according to one of the preceding claims, wherein the substrates (12) for the electrode layers (10a, 10b) are removed after the production of the pressure connection.

6. Method according to one of the preceding claims, wherein the separating films (8) present the largest area.

7. Method according to one of the preceding claims, wherein as the separating films (8) are fed into a roll gap (20) between the laminating rollers essentially no compressive force acts on the arrangement (5) and a compressive force is exerted on the arrangement (5) when the substrate electrode unit (10a, 10b) or the optional frames (18) are in the region of the roll gap (20).

8. Method according to one of the preceding claims, wherein the layered arrangement further comprises: a frame (18) around each substrate electrode unit (10a, 10b) for fixing the substrate electrode unit (10a, 10b).

9. Membrane electrode unit (4) produced by means of a method according to one of the preceding claims.

## Revendications

1. Procédé de fabrication à sec d'une unité (4) membrane-électrode pour un processus d'électrolyse, dans lequel on forme un agencement (5) de type stratifié comprenant les constituants suivant :
- placée au milieu, une membrane (16) fabriquée par extrusion, qui est séchée à l'avance à une température comprise entre 80°C et 100°C pendant une durée de 15 minutes à 30 minutes,
- de part et d'autre de la membrane (16), respectivement une unité (10a, 10b) support-électrode, ayant une couche (14a, 14b) d'électrode déposée sur un support (12),
- du côté extérieur, deux feuilles (8) de séparation,
dans lequel on presse l'agencement (5) entre deux rouleaux (6a, 6b) de laminage, de manière à produire une liaison par pression au moins entre la membrane (16) et les couches (14a, 14b) d'électrode.

2. Procédé suivant la revendication 1,
dans lequel on lamine l'unité (4) de membrane-électrode à une température de 180°C à 190°C.

3. Procédé suivant la revendication 1 ou 2,
dans lequel on utilise des feuilles de polyimide comme feuilles (8) de séparation.

4. Procédé suivant l'une des revendications précédentes,
dans lequel, après la production de la liaison par pression, on retire au moins les feuilles (8) de séparation extérieures et les cadres (18).

5. Procédé suivant l'une des revendications précédentes,
dans lequel, après la production de la liaison par pression, on retire les supports (12) des couches (10a, 10b) d'électrode.

6. Procédé suivant l'une des revendications précédentes,
dans lequel les feuilles (8) de séparation ont la surface la plus grande.

7. Procédé suivant l'une des revendications précédentes,
dans lequel, à l'entrée des feuilles (8) de séparation dans une emprise (20) entre les rouleaux de laminage, sensiblement aucune force de pression n'agit sur l'agencement (5) et on applique une force de pression à l'agencement (5) lorsque les unités (10a, 10b) de support-électrode ou les cadres (18) facultatifs se trouvent dans la zone de l'emprise (20).

8. Procédé suivant l'une des revendications précédentes,
dans lequel l'agencement de type stratifié comprend en outre : autour des unités (10a, 10b) de support-électrode respectives, un cadre (18) d'immobilisation de l'unité (10a, 10b) de support-électrode.

9. Unité (4) de membrane-électrode fabriquée au moyen d'un procédé suivant l'une des revendications précédentes.
